(19) Europäisches Patentamt
European Patent Office
Office européen des brevets

(11) **EP 3 306 385 B1**

(12) **EUROPEAN PATENT SPECIFICATION**

(45) Date of publication and mention
of the grant of the patent:
**20.01.2021 Bulletin 2021/03**

(51) Int Cl.:
***G02F 1/1368*** *(2006.01)* ***G02F 1/1362*** *(2006.01)*

(21) Application number: **15860011.4**

(86) International application number:
**PCT/CN2015/095173**

(22) Date of filing: **20.11.2015**

(87) International publication number:
**WO 2016/188062 (01.12.2016 Gazette 2016/48)**

(54) **ARRAY SUBSTRATE, LIQUID CRYSTAL DISPLAY PANEL AND LIQUID CRYSTAL DISPLAY DEVICE**

ARRAYSUBSTRAT, FLÜSSIGKRISTALLANZEIGETAFEL UND FLÜSSIGKRISTALLANZEIGEVORRICHTUNG

SUBSTRAT MATRICIEL, PANNEAU D'AFFICHAGE À CRISTAUX LIQUIDES ET DISPOSITIF D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2015 CN 201520348057 U**

(43) Date of publication of application:
**11.04.2018 Bulletin 2018/15**

(73) Proprietor: **BOE Technology Group Co., Ltd.**
**Beijing 100015 (CN)**

(72) Inventors:
• **LI, Wenbo**
**Beijing 100176 (CN)**
• **LI, Pan**
**Beijing 100176 (CN)**

(74) Representative: **Gesthuysen Patentanwälte**
**Patentanwälte**
**Huyssenallee 100**
**45128 Essen (DE)**

(56) References cited:
| | |
|---|---|
| CN-A- 102 411 241 | CN-A- 102 914 928 |
| CN-A- 103 323 990 | CN-U- 203 930 287 |
| CN-U- 204 065 625 | CN-U- 204 758 983 |
| US-A1- 2011 241 004 | US-B2- 8 355 090 |

**Description**

<u>FIELD</u>

The present disclosure relates to the field of display technologies, and particularly to an array substrate, a liquid crystal display panel and a liquid crystal display device.

<u>BACKGROUND</u>

Liquid crystal display devices have characteristics including low power consumption, no radiation, and the like, which is predominant in the field of plane display currently.

The liquid crystal display panel in the existing liquid crystal display device usually comprises an array substrate and a color film substrate arranged opposite to each other, and a liquid crystal layer filled between the array substrate and the color film substrate. The array substrate is provided with a plurality of pixel units and each pixel unit is provided with one pixel electrode, and the color film substrate is provided with a common electrode. The deflection angle of the liquid crystal molecules within the liquid crystal region to which the pixel unit corresponds can be controlled by means of an electric field formed between the pixel electrode and the common electrode, thereby carrying out the liquid crystal display function.

However, in the existing array substrate, since each pixel unit only comprises one pixel electrode, under the effect of the electric field formed by the pixel electrode and the common electrode, the liquid crystal molecules within the liquid crystal region to which a single pixel unit corresponds all have the same deflection angle, resulting in a small visual angle of the liquid crystal display device in the prior art.

CN 203930287U provides an array substrate comprising a plurality of subpixels, each of the subpixels comprising a first pixel electrode and a second pixel electrode which are out of contact. In particular, an organic resin layer is arranged between the thin film transistor and the first pixel electrode and the second pixel electrode, and the thickness of the insulating layer in organic material is generally at the micron level. As a result, the interference of the gate line signal to the first pixel electrode and the second pixel electrode can be avoided, moreover, parasitic capacitance generated between the first pixel electrode and the second pixel electrode and respective electrodes of the thin film transistor can be reduced.

US 2011/241004A1 provides a TFT which includes a semiconductor layer and a gate electrode facing each other. The semiconductor layer 1a includes a first source/drain area, a second source/drain area, and a channel area.

<u>SUMMARY</u>

It is an object of the present disclosure to provide an array substrate, a liquid crystal display panel and display device, which can at least partially alleviate the problem existing in the prior art.

A first aspect of the present disclosure provides an array substrate. The array substrate may comprise a plurality of pixel units arranged in an array, at least one of the pixel units comprises a plurality of first pixel electrodes and a second pixel electrode, each of the first pixel electrodes is connected with a first thin film transistor, the second pixel electrode is connected with a second thin film transistor; wherein,
a channel is provided between a source and a drain in each of the first thin film transistors, a projection of each of the first pixel electrodes on a plane where the channel of a corresponding first thin film transistor resides covers at least partially the channel of the corresponding first thin film transistor; as for each of the first thin film transistors, an area of a portion of the channel thereof which is covered by a corresponding first pixel electrode is not equal; each of the first pixel electrodes and the source and drain in the corresponding first thin film transistor constitute a top gate thin film transistor.

In the array substrate provided by the present disclosure, at least one pixel unit from the plurality of pixel units comprises a plurality of first pixel electrodes driven by corresponding first thin film transistors and a second pixel electrode driven by a second thin film transistor, wherein a channel is provided between the source and the drain of each first thin film transistor, the projection of each first pixel electrode on the plane of the channel of the corresponding first thin film transistor covers at least partially the channel of the corresponding first thin film transistor, and each first pixel electrode constitutes a top gate thin film transistor in company with the source and the drain of the corresponding first thin film transistor. In each top gate thin film transistor, the first pixel electrode is used as a gate of the top gate thin film transistor, the drain of the corresponding first thin film transistor is used as a source of the top gate thin film transistor, and the source of the corresponding first thin film transistor is used as a drain of the top gate thin film transistor. Moreover, each first pixel electrode is electrically connected to the source of the corresponding top gate thin film transistor (i.e. the drain of the corresponding first thin film transistor). When the first pixel electrode discharges, carrier migration is generated within the gate of the corresponding top gate thin film transistor (i.e. the first pixel electrode) such that the channel between the source and the drain in the top gate thin film transistor is conducting, i.e. the top gate thin film transistor is in a switch-on state, thereby enabling the first pixel electrode to release partial voltage through the top gate thin film transistor. Therefore, when the plurality of first pixel electrodes and the second pixel electrode discharge, in the same pixel unit the voltages of the plurality of first pixel electrodes are lower than the voltage of the second pixel electrode, such that the deflection angle of the liquid crystal molecules within the liquid crystal regions to which the plurality of first pixel electrodes correspond is smaller than the deflection angle of the liquid crystal molecules within the liquid crystal region to which the second pixel electrode corresponds. The plurality of first pixel electrodes release the voltage at different rates through the corresponding top gate thin film transistors, such that the respective first pixel electrodes have different voltages. The different voltages enable the liquid crystal molecules within the corresponding liquid crystal regions to have different deflection angles, that is, the liquid crystal molecules within the liquid crystal region to which the same pixel unit corresponds have different deflection angles. Accordingly, as compared to the prior art that the deflection angles of the liquid crystal molecules within the liquid crystal region to which the same pixel unit corresponds are identical, in the array substrate provided by the present disclosure, the liquid crystal molecules within the liquid crystal region to which the same pixel unit corresponds at least have two deflection angles, thereby significantly increasing the visual angle of the liquid crystal display device.

A second aspect of the present disclosure provides a liquid crystal display panel comprising the array substrate provided by the above technical solution.

The advantages possessed by the liquid crystal display panel provided by the present disclosure relative to the prior art are the same as those possessed by the above array substrate relative to the prior art, which are not described here in detail for simplicity.

A third aspect of the present disclosure further provides a liquid crystal display device comprising the liquid crystal display panel provided by the above technical solution.

The advantages possessed by the liquid crystal display device provided by the present disclosure relative to the prior art are the same as those possessed by the above liquid crystal display panel relative to the prior art, which are not described here in detail for simplicity.

## BRIEF DESCRIPTION OF THE DRAWINGS

The figures described here are used to provide further understanding of the present disclosure and constitute a part of the present disclosure. The illustrative embodiments of the present disclosure and explanations thereof are used to interpret the present disclosure and do not limit the present disclosure in an inappropriate manner. In the figures,

Fig. 1 is a structural schematic diagram of a pixel unit in an array substrate of the embodiments of the present disclosure;

Fig. 2 is a structural schematic diagram of another pixel unit in an array substrate of the embodiments of the present disclosure.

Reference Signs:

| | | | |
|---|---|---|---|
| 1 | - gate line | 2 | - data line |
| 21 - | recess | 100 | - first pixel electrode |
| 110 | - first thin film transistor | 111 | - source of first thin film transistor |
| 112 | - drain of first thin film transistor | 113 | - first via hole |
| 200 | - second pixel electrode | 210 | - second thin film transistor |
| 211 | - source of second thin film transistor | 212 | - drain of second thin film transistor |
| 213 | - second via hole | 300 | - common electrode |
| 310 | - shielding electrode | | |

## DETAILED DESCRIPTION

In order to further explain the array substrate and the display device provided by the embodiments of the present disclosure, detailed description will be provided below with reference to the drawings.

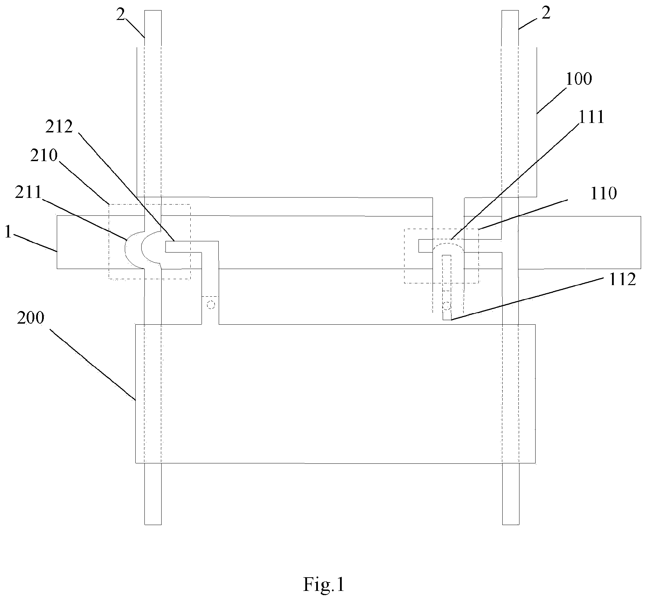

Referring to Fig. 1, embodiments of the present disclosure provide an array substrate comprising a plurality of pixel units arranged in an array, wherein pixel electrodes in at least one pixel unit are disposed in the following manner.

Fig. 1 shows one pixel unit in the array substrate. The pixel unit comprises a first pixel electrode 100 and a second pixel electrode 200. The first pixel electrode 100 is connected with a first thin film transistor 110, and the second pixel electrode 200 is connected with a second thin film transistor 210, wherein a channel is provided between a source 111 and a drain 112 of the first thin film transistor 110. A projection of the first pixel electrode 100 on the plane where the channel resides covers at least part of the channel. The first pixel electrode 100 and the source 111 and the drain 112 of the first thin film transistor 110 act as a top gate thin film transistor (i.e. the first pixel electrode 100 simultaneously acts as a gate of the first thin film transistor 110).

Upon implementation, the array substrate comprises a base substrate, and a plurality of pixel units arranged in an array on the base substrate. In at least one pixel unit, the first pixel electrode 100 and the second pixel electrode 200 are located at the top of the pixel unit. The first pixel electrode 100 is used as the gate of the top gate thin film transistor, the drain 112 of the first thin film transistor 110 is used as the source of the top gate thin film transistor, the source 111 of the first thin film transistor 110 is used as the drain of the top gate thin film transistor, and the first pixel electrode is connected to the source of the top gate thin film transistor (i.e. drain 112).

By virtue of the above setting, when the pixel electrode discharges, there is carrier migration in the gate of the top gate thin film transistor (i.e. first pixel electrode 100), such that the channel between the source and the drain of the top gate thin film transistor is conducting, i.e. the top gate thin film transistor is in a switch-on state, thereby the first pixel electrode 100 can release partial voltage to a data line 2 through the top gate thin film transistor, such that in the same pixel unit, the discharge rate of the first pixel electrode 100 is higher than that of the second pixel electrode 200, thereby causing the voltage of the first pixel electrode 100 to be lower than that of the second pixel electrode 200, further making the field intensity of an electric field formed by the first pixel electrode 110 and a common electrode on a color film substrate lower than the field intensity of an electric field formed by the second pixel electrode 200 and the common electrode on the color film substrate. The liquid crystal region to which the same pixel unit corresponds is substantially divided into a low voltage domain to which the first pixel electrode 100 corresponds and a high voltage domain to which the second pixel electrode 200 corresponds. Accordingly, under the effects of the above electric fields with different field intensities, the electric field force acting on the liquid crystal molecules within the low voltage domain is smaller than the electric field force acting on the liquid crystal molecules within the high voltage domain, such that the deflection angle of the liquid crystal molecules within the low voltage domain is smaller than that of the liquid crystal molecules within the high voltage domain, that is, the liquid crystal molecules within the liquid crystal region to which the same pixel unit corresponds have different deflection angles. Therefore, as compared to the prior art that the liquid crystal molecules within the liquid crystal region to which the same pixel unit corresponds have identical deflection angles, in the array substrate provided by the present disclosure, the liquid crystal molecules within the liquid crystal region to which the same pixel unit corresponds at least have two deflection angles, thereby significantly increasing the visual angle of the liquid crystal display device.

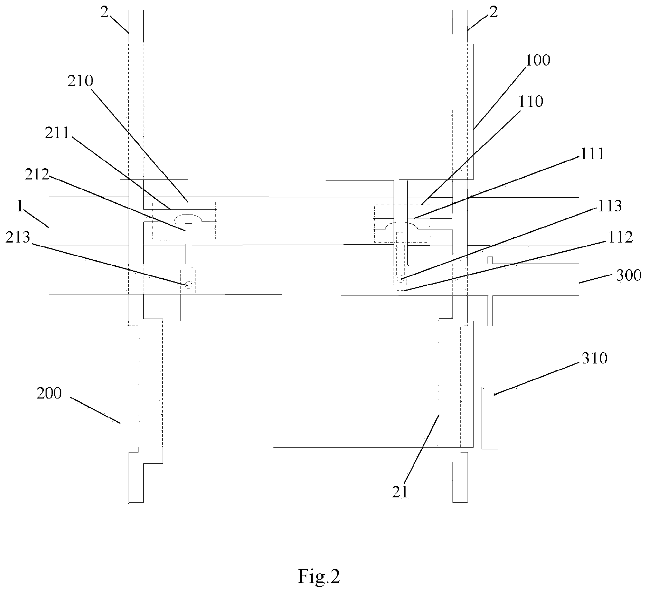

In the embodiments of the present disclosure, the projection of the first pixel electrode 100 on the plane where the channel between the source 111 and the drain 112 of the first thin film transistor 110 resides may cover the whole channel between the source 111 and the drain 112 of the first thin film transistor 110, as shown in Fig. 1, and may also cover part of the channel between the source 111 and the drain 112 of the first thin film transistor 110, as shown in Fig. 2. Since in general case the rate of discharge of the first pixel electrode 100 through the top gate thin film transistor is positively correlated with the area of the channel covered by the projection of the first pixel electrode 100 on the plane where the channel between the source 111 and the drain 112 of the first thin film transistor 110 resides, upon implementation, those skilled in the art can reasonably adjust the area of the channel covered by the projection of the first pixel electrode 100 according to the rate of discharge of the first pixel electrode 100 through the top gate thin film transistor and the size of the wiring space on the array substrate.

In some implementations, the same pixel unit may be provided with at least two first pixel electrodes 100. Each first pixel electrode 100 is driven by a corresponding first thin film transistor 110. There is a channel between a source 111 and a drain 112 of each first thin film transistor 110. The projection of the first pixel electrode 100 corresponding to the first thin film transistor 110 on the plane where the channel of the first thin film transistor 110 resides at least partially covers the channel, and for each first thin film transistor 110, the area of the portion of the channel covered by the projection of the first pixel electrode 100 is not equal, so as to constitute a different top gate thin film transistor corresponding to each first pixel electrode 100. By means of the above measure, in the same pixel unit, when the first pixel electrodes 100 and the second pixel electrode 200 discharge, the rates of discharge of respective first pixel electrodes 100 through corresponding top gate thin film transistors are set to be different to make the respective first pixel electrodes 100 have different voltages. The different voltages enable the liquid crystal molecules within respective low voltage domains to have different deflection angles, and additionally, the deflections angle of the liquid crystal molecules within the high voltage domain is also different from the deflection angles of the liquid crystal molecules within the respective low voltage domains. Therefore, in the embodiments of the present disclosure, the liquid crystal molecules within the liquid crystal region to which the same pixel unit corresponds at least have three different deflection angles, which significantly increases the visual angle of the liquid crystal display device as compared to the prior art that the liquid crystal molecules within the liquid crystal region to which the same pixel unit corresponds only have one deflection angle.

Referring to Fig. 1, as regards the above technical solution, the array substrate further comprises a plurality of data lines extending in a first direction and a plurality of gate lines extending in a second direction, and the second thin film transistor 210 comprises a source 211 and a gate arranged in different layers, wherein the source 211 consists of a segment of data line in the region where the data line 2 intersects the gate line 1, and the gate consists of a segment of gate line in the region where the gate line 1 intersects the data line 2. Specifically, the gate line 1 is located in a gate layer in the pixel unit, and the data line 2 is located in a source drain metal layer in the pixel unit where the source 111, the source 211, the drain 112 and the drain 212 are located. At the time of performing patterning process for the gate layer and the source drain metal layer, a segment of data line 2 in the region where the data line 2 intersects the gate line 1 is directly used as the source 211, and the gate line 1 within the region is used as the gate, without the need to additionally arrange the source 211, the gate and wires for connecting the source 211 and the gate to a signal line, respectively, on the base substrate. This can not only simplify the patterning process for the gate layer and the source drain metal layer, but also decrease the total area of the wires on the array substrate and increase the aperture ratio of the substrate, thereby producing better display effect. Furthermore, in accordance with an illustrative embodiment of the present disclosure, the first pixel electrode 100 and the second pixel electrode 200 in the same pixel unit are located at two sides of a signal line, respectively. For example, the first pixel electrode 100 and the second pixel electrode 200 in the same pixel unit are located at two sides of the gate line 1, respectively, such that both the first pixel electrode 100 and the second pixel electrode 200 are close to the gate line 1 so as to reduce the length of the wire for connecting the second pixel electrode 200 to the second thin film transistor 210 and the length of the wire for connecting the first pixel electrode 100 to the first thin film transistor 110, thereby further simplifying the patterning process for the gate layer and the source drain metal layer, decreasing the total area of the wires on the array substrate, and increasing the aperture ratio of the substrate, thereby producing better display effect.

Referring to Fig. 1, further, the shape of the source 211 of the second thin film transistor 210 is set as a circular arc. The circular arc-shaped source 211, as compared to an I-shaped source, increases the length of the channel between the source 211 and the drain 212, and further increases an average aspect ratio W/L of the channel (wherein the width W is the length of the channel, L is the width of the cross section of the channel; in this embodiment, the width W is in direct proportion to the length of the circular arc-shaped partial data line 2). When the second thin film transistor 210 is in a switch-on state, the charge current $I_{on}$ thereof and the aspect ratio W/L of the channel have the following relationship:

$$ I_{on} = \frac{1}{2} \mu_n C_{ox} \frac{W}{L} \left( V_{gs} - V_{th} \right)^2 V_{gs} $$

wherein $V_{gs}$ is a potential difference between the gate and the source, and $V_{th}$ is an initial excited voltage of charges for conduction band of the active layer, i.e. a threshold voltage. $C_{ox} = \varepsilon_0 \varepsilon_{ox}/d_{ox}$, in the formula $C_{ox}$ is a capacitance of a unit area of the gate insulating layer, $\varepsilon_0$ is a vacuum dielectric constant, $\varepsilon_{ox}$ is a dielectric constant of the gate insulating layer, and $d_{ox}$ is a thickness of the gate insulating layer. $\mu_n$ is a mobility of electronic carriers of the active layer.

As can be known from the above relationship, the charge current of the second thin film transistor 210 is in direct proportion to the aspect ratio of the channel thereof. For the above reason, the source 211 of the second thin film transistor 210 is set as a circular arc such that the channel between the source 211 and the drain 212 of the second thin film transistor becomes longer to thereby increase the aspect ratio of the channel of the second thin film transistor 210 and further increase the charge current of the second thin film transistor 210 to increase the voltage obtained by the second pixel electrode 200 upon charging and further increase the difference between the voltage of the first pixel electrode 100 and the voltage of the second pixel electrode 200 in the same pixel unit, thereby further increasing the difference between the deflection angle of the liquid crystal molecules within the low voltage domain and the deflection angle of the liquid crystal molecules within the high voltage domain such that the angle between the deflection angle of the liquid crystal molecules within the low voltage domain and the deflection angle of the liquid crystal molecules within the high voltage domain is larger, thereby further enlarging the visual angle of the liquid crystal display device.

Referring to Fig. 2, in general case, the higher the voltage possessed by the first pixel electrode 100 or the second pixel electrode 200 is, the larger the interference of the generated electromagnetic field on the signals passing through surrounding components is. Therefore, as compared to the first pixel electrode 100, the electromagnetic field generated by the second pixel electrode 200 causes more significant interference on the signals passing through surrounding components. In order to alleviate this phenomenon, as an improved solution of the above technical solution, a common electrode 300 is further provided between the first pixel electrode 100 and the second pixel electrode 200, which is provided with a shielding electrode 310 that extends to the second pixel electrode 200 and is located between two adjacent second pixel electrodes 200. By virtue of the above setting, the two adjacent second pixel electrodes 200 are isolated by the shielding electrode 310, and the electromagnetic field generated by the second pixel electrode 200 is shielded by the shielding electrode 310 to alleviate the interference of the electromagnetic field generated by the second pixel electrode 200 on the signals passing through the components in the adjacent pixel unit. In addition, the shielding electrode 310 may be strip-shaped as shown in Fig. 2, for example, a tuning fork-like shielding electrode 310. The tuning fork-like shielding electrode has two fork arms arranged in parallel, and the two fork arms shield the electromagnetic field of the second pixel electrode 200 in company with each other, which can better attenuate the impact of the electromagnetic field on surrounding components and further improve the shielding effect of the shielding electrode 310 on the electric field and the magnetic field generated by the second pixel electrode 200.

Referring to Fig. 2, further, the shielding electrode 310 is located between two adjacent data lines 2, and at two sides of the shielding electrode 310, a portion of the data line 2 which corresponds to each second pixel electrode 200 has a recess 21 recessed inwards the second pixel electrode 200. Specifically, the data line 2 is located in the source drain metal layer where the sources 111, 211 and the drains 112, 212 are located. At the time of performing patterning process for the source drain metal layer, on the data line 2, corresponding to the respective adjacent second pixel electrodes 200, a segment of data line on the data line 2 is raised towards the second pixel electrode 200 to form the above recess 21 which may exhibit the shape of a rectangular pit. By virtue of the above setting, there is an appropriate spacing between part of the data line 2 nearby the second pixel electrode 200 and the shielding electrode 310, which can prevent the part of the data line 2 and the shielding electrode 310 from forming a parasitic capacitance that results in interference on the signals passing through the data line 2.

Referring to Fig. 2, as regards the above improved solution, a passivation layer is provided between the drain 111 of the first thin film transistor 110 and the first pixel electrode 100, the drain 111 of the first thin film transistor 110 is electrically connected to the first pixel electrode 100 via a first via hole 113 disposed in the passivation layer, and the projection of the first via hole 113 on the plane where the common electrode 300 resides is located within the common electrode 300. Specifically, the first pixel electrode 100 and the common electrode 300 have a certain opposite area at the first via hole 113 such that the first pixel electrode 100 and the common electrode form a small compensating capacitor at the first via hole 113 (the first pixel electrode 100 and the common electrode 300 act as two electrodes of the compensating capacitor, respectively). The compensating capacitor can store certain electric energy when the first pixel electrode 100 is charged and appropriately compensate the voltage of the first pixel electrode 100 when it discharges so as to prevent the first pixel electrode 100 from discharging too fast. Since too fast discharge of the first pixel electrode 100 will result in that the discharge process thereof cannot last until the start of the next charge process, the liquid crystal molecules within the low voltage domain cannot keep deflected during one charge and discharge cycle of the first pixel electrode 100, such that the low voltage domain cannot continue passing through light during one charge and discharge cycle of the first pixel electrode 100, finally resulting in blinking of pixel dots on the picture to which the pixel unit corresponds. Therefore, the embodiments of the present disclosure arrange the first via hole 113 right over the common electrode 300 to avoid blinking of pixel dots on the picture which results from too fast discharge of the first pixel electrode.

Referring to Fig. 2, as regards the above improved solution, a passivation layer is provided between the drain 211 of the second thin film transistor 210 and the second pixel electrode 200, the drain 211 of the second thin film transistor 210 is electrically connected to second pixel electrode 200 via a second via hole 213 disposed in the passivation layer, and the projection of the second via hole 213 on the plane where the common electrode 300 reside is located within the common electrode 300. Specifically, the second pixel electrode 200 and the common electrode 300 have a certain opposite area at the second via hole 213 such that the second pixel electrode 200 and the common electrode 300 form a small compensating capacitor at the second via hole 213. The compensating capacitor can store certain electric energy when the second pixel electrode 200 is charged and compensate the voltage of the second pixel electrode 200 to some extent when the second pixel electrode 200 discharges so as to further decrease the discharge rate of the second pixel electrode 200 such that the voltage of the second pixel electrode 200 in the same pixel unit is higher than the voltage of the first pixel electrode 100, thereby ensuring the difference between the deflection angle of the liquid crystal molecules within the low voltage domain and the deflection angle of the liquid crystal molecules within the high voltage domain, and further ensuring the visual angle of the liquid crystal display device.

The embodiments of the present disclosure further provide a liquid crystal display panel comprising the array substrate according to any one of the above technical solutions. The array substrate comprised in the liquid crystal display panel provided by the present disclosure is provided with a plurality of pixel units arranged in an array, wherein at least one pixel unit comprises a plurality of first pixel electrodes driven by corresponding first thin film transistors and a second pixel electrode driven by a second thin film transistor, wherein a channel is provided between a source and a drain of each first thin film transistor, the projection of each first pixel electrode on the plane of the channel of the corresponding first thin film transistor covers at least partially the channel of the corresponding first thin film transistor, and each first pixel electrode constitutes a top gate thin film transistor in company with the source and the drain in the corresponding first thin film transistor. In each top gate thin film transistor, the first pixel electrode is used as a gate, the drain of the corresponding first thin film transistor is used as a source, and the source of the corresponding first thin film transistor is used as a drain. Moreover, each first pixel electrode is electrically connected to the source of the corresponding top gate thin film transistor (i.e. the drain of the corresponding first thin film transistor). When the first pixel electrode discharges, carrier migration is generated within the gate of the corresponding top gate thin film transistor (i.e. the first pixel electrode) such that the channel between the source and the drain of the top gate thin film transistor is conducting, i.e. the top gate thin film transistor is in a switch-on state, thereby enabling the first pixel electrode to release partial voltage through the top gate thin film transistor. Therefore, when the plurality of first pixel electrodes and the second pixel electrode discharge, in the same pixel unit the voltages of the plurality of first pixel electrodes are lower than the voltage of the second pixel electrode, such that the deflection angle of the liquid crystal molecules within the liquid crystal regions to which the plurality of first pixel electrodes correspond is smaller than the deflection angle of the liquid crystal molecules within the liquid crystal region to which the second pixel electrode corresponds. The one or more first pixel electrodes release the voltage at different rates through the corresponding top gate thin film transistors, such that the respective first pixel electrodes have different voltages. The different voltages enable the liquid crystal molecules within the corresponding liquid crystal regions to have different deflection angles, that is, the liquid crystal molecules within the liquid crystal region to which the same pixel unit corresponds have different deflection angles. Accordingly, as compared to the prior art that the deflection angles of the liquid crystal molecules within the liquid crystal region to which the same pixel unit corresponds are identical, in the array substrate employed in the liquid crystal display panel provided by the present disclosure, the liquid crystal molecules within the liquid crystal region to which the same pixel unit corresponds at least have two deflection angles, thereby significantly increasing the visual angle of the liquid crystal display device.

The embodiments of the present disclosure further provide a liquid crystal display device comprising the liquid crystal display panel according to the above technical solution.

The liquid crystal display device provided by the present disclosure comprises a liquid crystal display panel comprising an array substrate. The array substrate is provided with a plurality of pixel units arranged in an array, wherein at least one pixel unit comprises a plurality of first pixel electrodes driven by corresponding first thin film transistors and a second pixel electrode driven by a second thin film transistor, wherein a channel is provided between a source and a drain of each first thin film transistor, the projection of each first pixel electrode on the plane of the channel of the corresponding first thin film transistor covers at least partially the channel of the corresponding first thin film transistor, and each first pixel electrode constitutes a top gate thin film transistor in company with the source and the drain of the corresponding first thin film transistor. In each top gate thin film transistor, the first pixel electrode is used as a gate, the drain of the corresponding first thin film transistor is used as a source, and the source of the corresponding first thin film transistor is used as a drain. Moreover, each first pixel electrode is electrically connected to the source of the corresponding top gate thin film transistor (i.e. the drain of the corresponding first thin film transistor). When the first pixel electrode discharges, carrier migration is generated within the gate of the corresponding top gate thin film transistor (i.e. the first pixel electrode) such that the channel between the source and the drain of the top gate thin film transistor is conducting, i.e. the top gate thin film transistor is in a switch-on state, thereby enabling the first pixel electrode to release partial voltage through the top gate thin film transistor. Therefore, when the plurality of first pixel electrodes and the second pixel electrode discharge, in the same pixel unit the voltages of the plurality of first pixel electrodes are lower than the voltage of the second pixel electrode, such that the deflection angle of the liquid crystal molecules within the liquid crystal regions to which the plurality of first pixel electrodes correspond is smaller than the deflection angle of the liquid crystal molecules within the liquid crystal region to which the second pixel electrode corresponds. The plurality of first pixel electrodes release the voltage at different rates through the corresponding top gate thin film transistors, such that the respective first pixel electrodes have different voltages. The different voltages enable the liquid crystal molecules within the corresponding liquid crystal regions to have different deflection angles, that is, the liquid crystal molecules within the liquid crystal region to which the same pixel unit corresponds have different deflection angles. Accordingly, as compared to the prior art that the deflection angles of the liquid crystal molecules within the liquid crystal region to which the same pixel unit corresponds are identical, in the liquid crystal display panel employed in the liquid crystal display device provided by the present disclosure, the liquid crystal molecules within the liquid crystal region to which the same pixel unit on the array substrate corresponds at least have two deflection angles, thereby significantly increasing the visual angle of the liquid crystal display device.

The above contents are just specific implementations of the present invention, but the protection scope of the present invention is not so limited. Any variation or substitution that can be easily conceived by the skilled person familiar with this technical field within the technical scope of the appended claims shall be covered within the protection scope of the present invention. Thus, the protection scope of the present invention is defined by the appended claims.

**Claims**

1. An array substrate, comprising a plurality of pixel units arranged in an array, wherein at least one of the pixel units comprises a first pixel electrode (100) and a second pixel electrode (200), the first pixel electrode (100) is connected with a first thin film transistor (110), and the second pixel electrode (200) is connected with a second thin film transistor (210); wherein, a channel is provided between a source (111) and a drain (112) of the first thin film transistor (110), a projection of the first pixel electrode (100) on a plane where the channel of the first thin film transistor (110) resides covers at least partially the channel of the first thin film transistor (110); **characterized in that** said at least one of the pixel units comprises a plurality of such first pixel electrodes (100) and a plurality of such first thin film transistors (110), each of said first pixel electrodes (100) being connected to a corresponding one of said first thin film transistors (110), **in that**, as for each of the first thin film transistors (110), an area of a portion of the channel thereof which is covered by a corresponding first pixel electrode (100) is not equal; and **in that** each of the first pixel electrodes (100) and the source (111) and drain (112) of the corresponding first thin film transistor (110) constitute a top gate thin film transistor.

2. The array substrate according to claim 1, wherein the array substrate further comprises a plurality of data lines (2) extending in a first direction and a plurality of gate lines (1) extending in a second direction; the second thin film transistor (210) comprises a source (211) and a gate arranged in different layers; wherein the source (211) of the second thin film transistor (210) consists of a segment of data line (2) in a region where the data lines (2) intersect the gate lines (1), and the gate of the second thin film transistor (210) consists of a segment of gate line (1) in a region where the gate lines (1) intersect the data lines (2).

3. The array substrate according to claim 2, wherein the plurality of first pixel electrodes (100) and the second pixel electrode (200) are located at two sides of a corresponding gate line (1), respectively.

4. The array substrate according to claim 2, wherein the source (211) of the second thin film transistor (210) is circular arc-shaped.

5. The array substrate according to claim 1 or 2, wherein a common electrode (300) is further provided between the plurality of first pixel electrodes (100) and the second pixel electrode (200), the common electrode (300) is provided with a shielding electrode (310) that extends to the second pixel electrode (200) and is located between two adjacent second pixel electrodes (200).

6. The array substrate according to claim 5, wherein the shielding electrode (310) is strip-shaped.

7. The array substrate according to claim 6, wherein the shielding electrode (310) has two fork arms arranged in parallel.

8. The array substrate according to claim 5, wherein the shielding electrode (310) is located between two adjacent data lines (2); at two sides of the shielding electrode (310), a portion of the data line (2) which corresponds to each of the second pixel electrodes (200) has a recess (21) recessed inwards the second pixel electrode (200).

9. The array substrate according to claim 5, wherein a passivation layer is provided between the drain (112) of each first thin film transistor (110) and the corresponding first pixel electrode (100), the drain (112) of each first thin film transistor (110) is electrically connected to the corresponding first pixel electrode (100) via a first via hole (113) disposed in the passivation layer; and a projection of the first via hole (113) on a plane where the common electrode (300) resides is located within the common electrode (300).

10. The array substrate according to claim 5, wherein a passivation layer is provided between the drain (212) of the second thin film transistor (210) and the second pixel electrode (200), the drain (212) of the second thin film transistor (210) is electrically connected to the second pixel electrode (200) via a second via hole (213) disposed in the passivation layer; and a projection of the second via hole (213) on a plane where the common electrode (300) resides is located within the common electrode (300).

11. A liquid crystal display panel, comprising the array substrate according to any one of claims 1 to 10.

12. A liquid crystal display device, comprising the liquid crystal display panel according to claim 11.

**Patentansprüche**

1. Array-Substrat, das eine Mehrzahl von Pixeleinheiten aufweist, die in einem Array angeordnet sind, wobei mindestens eine der Pixeleinheiten eine erste Pixelelektrode (100) und eine zweite Pixelelektrode (200) aufweist, die erste Pixelelektrode (100) mit einem ersten Dünnschichttransistor (110) verbunden ist und die zweite Pixelelektrode (200) mit einem zweiten Dünnschichttransistor (210) verbunden ist; wobei ein Kanal zwischen einem Source-Anschluss (111) und einem Drain-Anschluss (112) des ersten Dünnschichttransistors (110) bereitgestellt ist, wobei eine Verlängerung der ersten Pixelelektrode (100) auf einer Ebene, in der der Kanal des ersten Dünnschichttransistors (110) liegt, den Kanal des ersten Dünnschichttransistors (110) mindestens teilweise bedeckt; **dadurch gekennzeichnet, dass** die mindestens eine der Pixeleinheiten eine Mehrzahl derartiger erster Pixelelektroden (100) und eine Mehrzahl derartiger erster Dünnschichttransistoren (110) aufweist, wobei jede der ersten Pixelelektroden (100) mit einem entsprechenden der ersten Dünnschichttransistoren (110) verbunden ist, dadurch, dass für jeden der ersten Dünnschichttransistoren (110) eine Fläche eines Abschnitts dessen Kanals, der von einer entsprechenden ersten Pixelelektrode (100) bedeckt ist, nicht gleich ist, und dadurch, dass jede der ersten Pixelelektroden (100) und der Source-Anschluss (111) und Drain-Anschluss (112) des entsprechenden ersten Dünnschichttransistors (110) einen Dünnschichttransistor mit oben liegendem Gate (Top Gate) darstellen.

2. Array-Substrat nach Anspruch 1, wobei das Array-Substrat ferner eine Mehrzahl von Datenleitungen (2), die sich in eine erste Richtung erstrecken, und eine Mehrzahl von Gate-Leitungen (1), die sich in eine zweite Richtung erstrecken, aufweist; wobei der zweite Dünnschichttransistor (210) einen Source-Anschluss (211) und einen Gate-Anschluss aufweist, die in verschiedenen Lagen angeordnet sind; wobei der Source-Anschluss (211) des zweiten Dünnschichttransistors (210) aus einem Segment Datenleitung (2) in einem Bereich besteht, in dem die Datenleitungen (2) die Gate-Leitungen (1) kreuzen, und der Gate-Anschluss des zweiten Dünnschichttransistors (210) aus einem Segment Gate-Leitung (1) in einem Bereich besteht, in dem die Gate-Leitungen (1) die Datenleitungen (2) kreuzen.

3. Array-Substrat nach Anspruch 2, wobei sich die Mehrzahl erster Pixelelektroden (100) bzw. die zweite Pixelelektrode (200) an zwei Seiten einer entsprechenden Gate-Leitung (1) befinden.

4. Array-Substrat nach Anspruch 2, wobei der Source-Anschluss (211) des zweiten Dünnschichttransistors (210) kreisbogenförmig ist.

5. Array-Substrat nach Anspruch 1 oder 2, wobei eine gemeinsame Elektrode (300) ferner zwischen der Mehrzahl erster Pixelelektroden (100) und der zweiten Pixelelektrode (200) bereitgestellt ist, wobei die gemeinsame Elektrode (300) mit einer Abschirmelektrode (310) bereitgestellt ist, die sich zu der zweiten Pixelelektrode (200) erstreckt und sich zwischen zwei benachbarten zweiten Pixelelektroden (200) befindet.

6. Array-Substrat nach Anspruch 5, wobei die Abschirmelektrode (310) streifenförmig ist.

7. Array-Substrat nach Anspruch 6, wobei die Abschirmelektrode (310) zwei parallel angeordnete Gabelzinken aufweist.

8. Array-Substrat nach Anspruch 5, wobei sich die Abschirmelektrode (310) zwischen zwei benachbarten Datenleitungen (2) befindet; wobei an zwei Seiten der Abschirmelektrode (310) ein Abschnitt der Datenleitung (2), der jeder der zweiten Pixelelektroden (200) entspricht, einen Rücksprung (21) aufweist, der nach innen zur zweiten Pixelelektrode (200) zurückgesetzt ist.

9. Array-Substrat nach Anspruch 5, wobei eine Passivierungsschicht zwischen dem Drain-Anschluss (112) jedes ersten Dünnschichttransistors (110) und der entsprechenden ersten Pixelelektrode (100) bereitgestellt ist, wobei der Drain-Anschluss (112) jedes ersten Dünnschichttransistors (110) mit der entsprechenden ersten Pixelelektrode (100) elektrisch verbunden ist über ein erstes Durchgangsloch (113), das in der Passivierungsschicht angeordnet ist; und eine Verlängerung des ersten Durchgangslochs (113) auf eine Ebene, in der die gemeinsame Elektrode (300) liegt, sich innerhalb der gemeinsamen Elektrode (300) befindet.

10. Array-Substrat nach Anspruch 5, wobei eine Passivierungsschicht zwischen dem Drain-Anschluss (212) des zweiten Dünnschichttransistors (210) und der zweiten Pixelelektrode (200) bereitgestellt ist, wobei der Drain-Anschluss (212) des zweiten Dünnschichttransistors (210) mit der zweiten Pixelelektrode (200) elektrisch verbunden ist über ein zweites Durchgangsloch (213), das in der Passivierungsschicht angeordnet ist; und eine Verlängerung des zweiten Durchgangslochs (213) auf eine Ebene, in der die gemeinsame Elektrode (300) liegt, sich innerhalb der gemeinsamen Elektrode (300) befindet.

11. Flüssigkristallanzeigetafel, die das Array-Substrat nach einem der Ansprüche 1 bis 10 aufweist.

12. Flüssigkristallanzeigevorrichtung, die die Flüssigkristallanzeigetafel nach Anspruch 11 aufweist.

**Revendications**

1.  Substrat matriciel, comprenant une pluralité d'unités de pixels agencées de manière matricielle, au moins une des unités de pixels comprenant une première électrode de pixel (100) et une seconde électrode de pixel (200), la première électrode de pixel (100) étant connectée à un premier transistor en couches minces (110), et la seconde électrode de pixel (200) étant connectée à un second transistor en couches minces (210) ; un canal étant fourni entre une source (111) et un drain (112) du premier transistor en couches minces (110), une projection de la première électrode de pixel (100) sur un plan où le canal du premier transistor en couches minces (110) se trouve recouvrant au moins partiellement le canal du premier transistor en couches minces (110) ; **caractérisé en ce que** ladite au moins une des unités de pixel comprend une pluralité de telles premières électrodes de pixel (100) et une pluralité de tels premiers transistors en couches minces (110), chacune desdites premières électrodes de pixel (100) étant connectée à un premier transistor en couches minces correspondant desdits premiers transistors en couches minces (110), **en ce que**, comme pour chacun des premiers transistors en couches minces (110), une zone d'une partie du canal de celui-ci qui est recouverte par une première électrode de pixel correspondante (100) n'est pas égale ; et **en ce que** chacune des premières électrodes de pixel (100) et la source (111) et le drain (112) du premier transistor en couches minces correspondant (110) constituent un transistor en couches minces de grille supérieure.

2.  Substrat matriciel selon la revendication 1, le substrat matriciel comprenant en outre une pluralité de lignes de données (2) s'étendant dans une première direction et une pluralité de lignes de grille (1) s'étendant dans une seconde direction ; le second transistor en couches minces (210) comprenant une source (211) et une grille agencées dans différentes couches ; la source (211) du second transistor en couches minces (210) étant constituée d'un segment de ligne de données (2) dans une région où les lignes de données (2) coupent les lignes de grille (1), et la grille du second transistor en couches minces (210) étant constituée d'un segment de ligne de grille (1) dans une région où les lignes de grille (1) coupent les lignes de données (2).

3.  Substrat matriciel selon la revendication 2, la pluralité de premières électrodes de pixels (100) et la seconde électrode de pixel (200) étant situées respectivement au niveau de deux côtés d'une ligne de grille (1) correspondante.

4.  Substrat matriciel selon la revendication 2, la source (211) du second transistor en couches minces (210) étant en forme d'arc circulaire.

5.  Substrat matriciel selon la revendication 1 ou 2, une électrode commune (300) étant en outre fournie entre la pluralité de premières électrodes de pixel (100) et la seconde électrode de pixel (200), l'électrode commune (300) étant pourvue d'une électrode de blindage (310) qui s'étend jusqu'à la seconde électrode de pixel (200) et étant située entre deux secondes électrodes de pixel adjacentes (200).

6.  Substrat matriciel selon la revendication 5, l'électrode de blindage (310) étant en forme de bande.

7.  Substrat matriciel selon la revendication 6, l'électrode de blindage (310) ayant deux bras de fourche agencés en parallèle.

8.  Substrat matriciel selon la revendication 5, l'électrode de blindage (310) étant située entre deux lignes de données adjacentes (2) ; sur deux côtés de l'électrode de blindage (310), une partie de la ligne de données (2) qui correspond à chacune des secondes électrodes de pixel (200) ayant un évidement (21) renfoncé vers l'intérieur de la seconde électrode de pixel (200).

9.  Substrat matriciel selon la revendication 5, une couche de passivation étant fournie entre le drain (112) de chaque premier transistor en couches minces (110) et la première électrode de pixel correspondante (100), le drain (112) de chaque premier transistor en couches minces (110) étant électriquement connecté à la première électrode de pixel correspondante (100) par l'intermédiaire d'un premier trou d'interconnexion (113) disposé dans la couche de passivation ; et une projection du premier trou d'interconnexion (113) sur un plan où l'électrode commune (300) se trouve étant située à l'intérieur de l'électrode commune (300).

10. Substrat matriciel selon la revendication 5, une couche de passivation étant fournie entre le drain (212) du second transistor en couches minces (210) et la seconde électrode de pixel (200), le drain (212) du second transistor en couches minces (210) étant électriquement connecté à la seconde électrode de pixel (200) par l'intermédiaire d'un second trou d'interconnexion (213) disposé dans la couche de passivation ; et une projection du second trou d'in-

EP 3 306 385 B1

terconnexion (213) sur un plan où l'électrode commune (300) se trouve étant située à l'intérieur de l'électrode commune (300).

11. Panneau d'affichage à cristaux liquides, comprenant le substrat matriciel selon l'une quelconque des revendications 1 à 10.

12. Dispositif d'affichage à cristaux liquides, comprenant le panneau d'affichage à cristaux liquides selon la revendication 11.

Fig.1

Fig.2

**EP 3 306 385 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 203930287 U
- US 2011241004 A1